# FASCICULE DE BREVET EUROPEEN

(11) **EP 1 108 985 B1**
(45) Date de publication et mention de la délivrance du brevet: **25.08.2004**
(21) Numéro de dépôt: 99204173.1
(22) Date de dépôt: 09.12.1999
(51) Int. Cl.: G01D 3/02, G06F 17/40, G01M 19/00, G01M 15/00

(54) **Système et procédé d'exploitation d'un essai**
System und Verfahren zum Betrieb einer Prüfeinrichtung
System and method for operating a test device

(43) Date de publication de la demande: 20.06.2001
(73) Titulaire: Techspace aero, 4041 Milmort - Herstal (BE)
(72) Inventeur: Delcourt, Jean-Paul Charles Albert, 4460 Grace-Hollogne (BE); Malbrouck, Robert Lambert Gilbert, 4432 Alleur (BE)
(74) Mandataire: Berrou, Paul

(56) Documents cités:
- EP-A- 0 342 970

## Description

On décrira ici un système d'appareils pour exploiter un essai, et un procédé correspondant.

Certains bancs d'essai de machine comprennent un nombre important de capteurs recueillant des données de l'essai et de moyens de visualisation ou d'affichage des résultats de l'essai, qui expriment les données mesurées par les capteurs après qu'elles ont été converties en grandeurs physiques selon l'étalonnage des capteurs et présentées de façon intelligible pour le personnel. Un ordinateur est utilisé pour faire ces conversions. Il s'agit donc de la pièce maîtresse du banc, qui reçoit et emmaganise les mesures des capteurs et transmet les résultats convertis en les répartissant entre les différents moyens d'affichage, selon la programmation faite auparavant. Les capteurs et les moyens d'affichage apparaissent comme des moyens subordonnés du banc. Pourtant, il est malaisé d'en ajouter ou même de changer leur réglage pendant une campagne d'essai, car il faut reprogrammer l'ordinateur pour tout changement de configuration du banc, ce qui impose une nouvelle compilation. Or on ne sait pas toujours à l'avance quelles mesures seront utiles, et certaines mesures peuvent n'offrir de l'intérêt que pendant certains essais ou certaines parties d'essai de la campagne. Les difficultés à reconfigurer le système rendent donc tentant de prévoir un nombre surabondant de capteurs et de moyens de visualisation qu'on exploite pendant toute une campagne d'essai, mais ce palliatif, qui conduit de toute façon à des coûts élevés en matériel, n'est pas toujours praticable car on doit recueillir et transmettre des quantités correspondantes de mesures et de résultats, alors que le débit de traitement de l'ordinateur est limité. On risque de ne plus pouvoir exploiter les données en temps réel et de perdre la possibilité de modifier le déroulement initialement prévus d'un essai en cours ou même de l'interrompre à temps si un phénomène imprévu, intéressant ou au contraire dangereux, apparaît.

La rigidité du système centralisé a aussi pour inconvénient qu'on doit résoudre constamment des problèmes d'incompatibilité de matériel, dès qu'on veut employer des appareils de constructeurs différents.

Un tel système centralisé a été proposé dans EP-A2-0 342 970.

L'invention a pour origine le désir de remédier à ces inconvénients. La principale caractéristique du système d'exploitation qu'on propose ici est qu'on renonce à la disposition traditionnelle à ordinateur central au profit d'une disposition décentralisée ou distribuée dans laquelle les capteurs et les dispositifs de visualisation fonctionnent de façon largement indépendante les uns des autres.

Pour résumer, l'invention concerne sous sa forme la plus générale un procédé d'exploitation d'essai, comprenant une prise de mesures d'essai par des capteurs, une transformation des mesures d'essai en résultats d'essai et un affichage des résultats d'essai par des dispositifs distincts, caractérisé en ce que les mesures d'essai sont ordonnées en un signal commun selon un format déterminé, et des ordinateurs respectivement associés aux dispositifs d'affichage consultent une base de données commune pour lire des portions respectives du signal et transformer lesdites portions en les résultats d'essai.

L'ordonnancement des mesures en un signal commun parcourant un câble permet d'éviter les opérations lentes de traitement et de mémorisation dans un ordinateur. Un moyen d'affichage peut être affecté et réaffecté à telle ou telle mesure à volonté par le personnel, sans effet ralentisseur sur le déroulement de l'affichage des autres résultats : l'ordinateur de ce moyen lit dans la base de données les relations qui lui permettent d'identifier les portions du signal dans lesquelles se trouvent les nouvelles mesures et de convertir ces mesures à l'aide des coefficients d'étalonnage également contenus dans cette base de données ; aucune reconfiguration d'ensemble du système n'est faite. Un tel procédé permet de ne suivre effectivement sur les moyens d'affichage que les phénomènes momentanément intéressants de l'essai, en commutant les catégories de résultats affichés aussi souvent que nécessaire.

En pratique, le câble a une bande passante suffisante pour supporter le passage d'un très grand nombre de résultats, bien supérieur au besoin des bancs d'essai réels : le goulot d'étranglement constitué par l'ordinateur central disparaît. Il est d'ailleurs facile d'ajouter des capteurs, car leurs mesures seront incorporées au signal d'ensemble d'après le format déterminé dans des vides de ce signal ; la base de données sera complétée par une opération simple pour mentionner l'existence et les caractéristiques de ce capteur. De même, l'addition de nouveaux moyens d'affichage ne soulève pas de difficultés.

Le système d'exploitation proposé comprend des capteurs placés sur un objet en essai, un dispositif d'acquisition de données des capteurs, des dispositifs d'affichage de résultats d'essai et des moyens de gestion du système reliés au dispositif d'acquisition et d'affichage des résultats, et il est original en ce que les moyens de gestion comprennent des ordinateurs distincts desservant respectivement les dispositifs d'affichage, un ordinateur serveur logeant une base de données et un câble auquel les ordinateurs et le dispositif d'acquisition de données sont reliés ; le dispositif d'acquisition de données est conçu pour émettre dans le câble les données des capteurs en un signal commun de format déterminé ; et les ordinateurs desservant les dispositifs d'affichage sont programmés pour consulter la base de données afin d'extraire des portions d'intérêt respectives du signal, et pour convertir ces portions d'intérêt en les résultats d'essai, la base de données comprenant des coefficients d'étalonnage des capteurs et des relations entre, notamment, les capteurs et des parties respectives du signal.

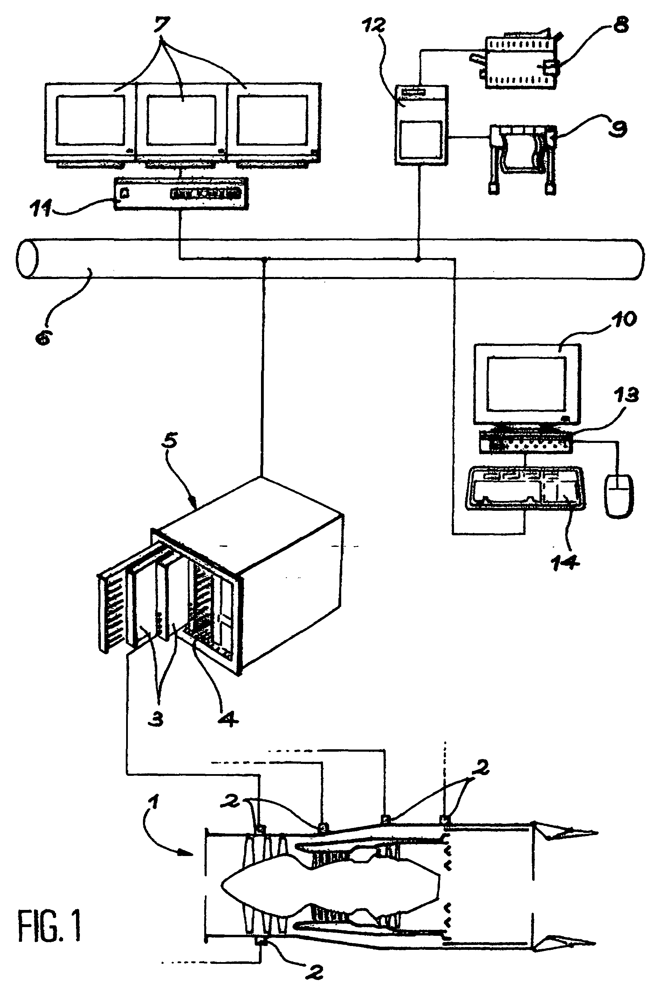

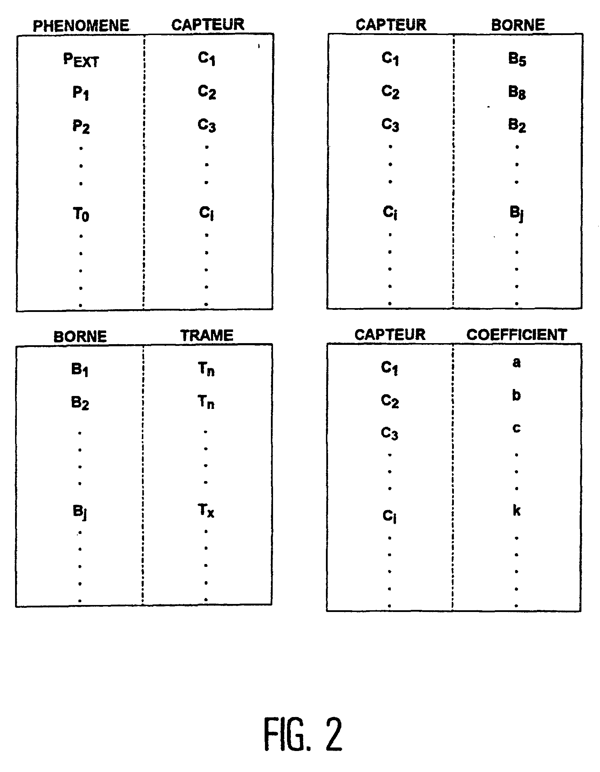

L'invention sera maintenant décrite en relation aux figures suivantes, qui en représentent une réalisation particulière :
■ la figure 1 est une vue générale du système,
■ et la figure 2 est un schéma du contenu de la base de données.

Le banc d'essai sert à l'épreuve d'une machine 1 telle qu'un turboréacteur, dans laquelle on a placé un certain nombre de capteurs 2 de température, de pression, etc. à des endroits voulus. Chacun des capteurs 2 est relié à une carte d'acquisition 3, et les cartes d'acquisition 3 sont enfoncées dans les créneaux d'un râtelier 4 monté dans le boîtier d'un module d'acquisition 5 des mesures. Le module d'acquisition 5 est ici un engin HP 75VXI apte à recueillir les signaux issus des capteurs 2 et ayant transité par les cartes d'acquisition 3, et à ordonner ces signaux en un signal unique qui est envoyé dans un câble Ethernet 6 auquel le module d'acquisition 5 est relié par sa borne de sortie. La norme VXI du module d'acquisition 5 permet d'insérer les sorties des capteurs 2 dans des trames individuelles du signal, c'est-à-dire des portions du signal qu'on retrouve à des emplacements invariables et périodiques en fonction de la position de sa carte 3 dans le râtelier 4. Les trames inoccupées du signal peuvent servir à la transmission de sorties d'autres capteurs quand leurs cartes auront été insérées dans le module d'acquisition 5.

Des moyens d'affichage ou de visualisation peuvent comprendre des écrans 7, une imprimante 8, un traceur de courbes 9 et un écran de supervision 10. Ces moyens sont reliés au câble 6 par des ordinateurs distincts, associés respectivement à l'un de ces moyens ou à un petit groupe de ces moyens, un ordinateur 11 desservant ici les écrans de visualisation 7, un ordinateur 12 desservant l'imprimante 8 et le traceur de courbes 9, et un ordinateur 13 desservant l'écran de supervision 10. Un clavier 14 relié à l'ordinateur 13 permet de commander à l'ensemble du système.

Selon le phénomène que l'on veut faire apparaître, les ordinateurs 11, 12 et 13 sont programmés pour chercher sur le signal parcourant le câble 6 les données qui les intéressent et les faire apparaître sur le dispositif d'affichage qu'ils desservent. Ils doivent recourir à une base de données, qui est logée dans un ordinateur serveur pouvant être un ordinateur spécial ou un des ordinateurs déjà rencontrés ; ici, on supposera que l'ordinateur 12 est cet ordinateur serveur.

La base de données comprend les informations nécessaires pour passer des mesures des capteurs 2 aux résultats d'essai, qui seuls intéressent le personnel. En se reportant à la figure 2, on voit que le contenu de la base de données peut consister en des listes de relations unissant les phénomènes à mesurer (par exemple la pression extérieure, d'autres pressions, la température ambiante) à des capteurs 2, appelés C1, C2, etc., les capteurs à des bornes B d'entrée du module d'acquisition 5 (associées à des créneaux du râtelier 4) et les bornes B à des trames du signal parcourant le câble 6. Si on éprouve le besoin d'afficher une température T0 sur un écran de visualisation 7, une lecture de la base de données montre que les mesures sont assurées par le capteur Ci qui est situé à la borne Bj du module d'acquisition 5, et qu'on trouvera la mesure du capteur concerné à la trame Tx. Pour que la mesure soit exploitable, il faut aussi disposer du coefficient d'étalonnage du capteur Ci, qu'on trouvera comme étant égal à la valeur k en consultant une autre liste. Si on décide par la suite que la visualisation de cette température Tₒ est inutile, l'écran 7 pourra affecté à une autre visualisation ; si on décide ensuite de se passer totalement de cette mesure, on extraira la carte d'acquisition 3 associée à ce capteur Ci du module d'acquisition 5 et on effacera les relations où intervient le capteur Ci dans la base de données. Le créneau laissé inoccupé du module d'acquisition 5 pourra ensuite recevoir la carte d'acquisition d'un autre capteur 2, ce qu'on entérinera en mentionnant ce capteur en face de la borne Bj, et en complétant les relations l'associant à un phénomène et à un coefficient d'étalonnage. L'addition de nouveaux moyens de visualisation pourra être faite sans formalité. La modification d'un coefficient d'étalonnage ne nécessitera qu'une réécriture dans la liste concernée, sans qu'il soit nécessaire de reprogrammer les ordinateurs 11, 12 et 13. On voit que même si une erreur d'étalonnage est faite, elle affectera tous les moyens de visualisation concernés. Si par exemple cette erreur se réduit à une erreur d'échelle ou d'unité, on pourra dans de nombreux cas exploiter quand même les résultats en gardant à l'esprit qu'un facteur de proportion devra être appliqué au phénomène concerné, sans qu'il y ait de discordance entre les moyens d'affichage d'où ces résultats sont originaires.

Ce système rend possible de demander des résultats avec une fréquence différente pour chaque mesure. le module d'acquisition 5 est alors instruit par le clavier 14 de fournir la sortie de la carte d'acquisition 3 concernée à la fréquence voulue dans la trame qui lui est réservée dans le signal. Les phénomènes intéressants peuvent donc être suivis et visualisés avec la précision voulue.

La base de données peut comprendre d'autres informations relatives à l'essai et à son exploitation, telles que les calibrations successives des capteurs 2, et des données d'archivage et sur l'histoire de l'essai.

## Revendications

1. Système d'exploitation d'essai, comprenant des capteurs (2) placés sur un objet (1) en essai, un dispositif d'acquisition (5) de données des capteurs, des dispositifs d'affichage (7, 8, 9, 10) de résultats d'essai et des moyens de gestion du système reliés au dispositif d'acquisition de données et aux dispositifs d'affichage de résultats, **caractérisé en ce que** les moyens de gestion comprennent des ordinateurs distincts (11, 12, 13) desservant respectivement les dispositifs d'affichage, un ordinateur serveur (12) logeant une base de données et un câble (6) auquel les ordinateurs et le dispositif d'acquisition de données (5) sont reliés ; le dispositif d'acquisition de données est conçu pour émettre dans le câble les données des capteurs en un signal commun de format déterminé ; et les ordinateurs (11, 12, 13) desservant les dispositifs d'affichage sont programmés pour consulter la base de données afin d'extraire des portions d'intérêt respectives du signal, et pour convertir ces portions d'intérêt en les résultats d'essai, la base de données comprenant des coefficients d'étalonnage des capteurs et des relations entre, notamment, les capteurs et des parties respectives du signal.

2. Système d'exploitation d'essai selon la revendication 1, **caractérisé en ce que** le module d'acquisition comprend un boîtier d'insertion de cartes d'acquisition (3) respectivement connectées aux capteurs (2).

3. Système d'exploitation d'essai selon l'une quelconque des revendications 1 ou 2, **caractérisé en ce que** le module d'acquisition (5) est conçu pour émettre dans le câble (6) les données des capteurs (2) à des fréquences ajustables indépendamment.

4. Procédé d'exploitation d'essai, comprenant une prise de mesures d'essai par des capteurs (2), une transformation des mesures d'essai en résultats d'essai et un affichage des résultats d'essai par des dispositifs (7, 8, 9, 10) distincts, **caractérisé en ce que** les mesures d'essai sont ordonnées en un signal commun selon un format déterminé, et des ordinateurs (11, 12, 13) respectivement associés aux dispositifs d'affichage consultent une base de données commune comprenant des relations entre les capteurs et des parties respectives du signal commun pour lire des portions respectives du signal et transformer lesdites portion en les résultats d'essai.

## Patentansprüche

1. System zur Versuchsauswertung
mit an einem Versuchsobjekt (1) angebrachten Meßfühlern (2),
mit einer Datenerfassungsvorrichtung (5) zur Erfassung von Daten der Meßfühler,
mit Anzeigevorrichtungen (7, 8, 9, 10) zur Anzeige der Meßergebnisse
und mit Steuerungsmitteln zum Steuern des Systems, die mit der Datenerfassungsvorrichtung und den Anzeigevorrichtungen zur Anzeige der Ergebnisse verbunden sind,
**dadurch gekennzeichnet,**
**daß** die Steuerungsmittel getrennte Rechner (11, 12, 13), die die einzelnen Anzeigevorrichtungen steuern, ferner einen Server-Rechner (12), der eine Datenbank enthält, sowie ein Kabel (6) umfassen, mit dem die Rechner und die Datenerfassungsvorrichtung (5) verbunden sind,
**daß** die Datenerfassungsvorrichtung so konzipiert ist, daß sie die Daten der Meßfühler in einem gemeinsamen Signal mit einem vorbestimmten Format in das Kabel sendet,
und **daß** die Rechner (11, 12, 13), die die Anzeigevorrichtungen steuern, so programmiert sind, daß sie die Datenbank durchsuchen, um entsprechende interessierende Abschnitte des Signals zu extrahieren, und daß sie diese interessierenden Abschnitte in die Versuchsergebnisse umwandeln, wobei die Datenbank Eichkoeffizienten der Meßfühler und Relationen insbesondere zwischen den Meßfühlern und den betreffenden Teilen des Signals enthält.

2. System zur Versuchsauswertung nach Anspruch 1, **dadurch gekennzeichnet, daß** das Erfassungsmodul eine Box zum Einsetzen von Erfassungskarten (3) aufweist, die jeweils mit den Meßfühlern (2) verbunden sind.

3. System zur Versuchsauswertung nach einem der Ansprüche 1 und 2, **dadurch gekennzeichnet, daß** das Erfassungsmodul (5) so konzipiert ist, daß es die Daten der Meßfühler mit unabhängig einstellbaren Frequenzen in das Kabel (6) sendet.

4. Verfahren zur Versuchsauswertung
mit einer Erfassung von Versuchsmessungen durch Meßfühler (2),
mit einer Umwandlung der Versuchsmessungen in Versuchsergebnisse und Anzeige der Versuchsergebnisse durch getrennte Vorrichtungen (7, 8, 9, 10),
**dadurch gekennzeichnet,**
**daß** die Versuchsmessungen in einem gemeinsamen Signal mit einem vorbestimmten Format angeordnet werden,
und **daß** den einzelnen Anzeigevorrichtungen zugeordnete Rechner (11, 12, 13) eine gemeinsame Datenbank durchsuchen, die Relationen zwischen den Meßfühlern und den entsprechenden Teilen des gemeinsamen Signals enthält, um entsprechende Abschnitte des Signals auszulesen und diese Abschnitte in die Versuchsergebnisse zu transformieren.

## Claims

1. Test exploitation system, comprising sensors (2) placed on an object (1) under test, an acquisition device (5) for acquiring data from the sensors, devices (7, 8, 9, 10) for displaying test results and system management means that are connected to the data acquisition device and to the devices for displaying results, **characterized in that** the management means comprise distinct computers (11, 12, 13) respectively serving the display devices, a host computer (12) housing a database and a cable (6) to which the computers and the data acquisition device (5) are connected; the data acquisition device is designed to send down the cable the data from the sensors as a common signal of determined format; and the computers (11, 12, 13) serving the display devices are programmed to consult the database so as to extract respective portions of interest of the signal, and to convert these portions of interest into the test results, the database comprising coefficients of calibration of the sensors and relations between, in particular, the sensors and respective parts of the signal.

2. Test exploitation system according to Claim 1, **characterized in that** the acquisition module comprises a box for inserting acquisition cards (3) that are respectively linked to the sensors (2).

3. Test exploitation system according to either of Claims 1 or 2, **characterized in that** the acquisition module (5) is designed to send down the cable (6) the data from the sensors (2) at independently adjustable frequencies.

4. Test exploitation process, comprising a capture of test measurements by sensors (2), a transformation of the test measurements into test results and a displaying of the test results by distinct devices (7, 8, 9, 10), **characterized in that** the test measurements are ordered as a common signal according to a determined format, and. computers (11, 12, 13) respectively associated with the display devices consult a common database comprising relations between the sensors and respective parts of the common signal so as to read the respective portions of the signal and to transform the said portions into the test results.
